# EUROPEAN PATENT APPLICATION

(11) **EP 2 637 368 A1**
(43) Date of publication of application: **11.09.2013**
(21) Application number: 12158712.5
(22) Date of filing: 09.03.2012
(51) Int. Cl.: H04L 12/58

(54) **Method for sharing a file when multiple versions exist**

(71) Applicant: BlackBerry Limited, Waterloo ON N2L 3W8 (CA)
(72) Inventor: Tulasidas, Sivanesan, Waterloo, Ontario N2L 3W8 (CA); Vinayagamoorthy, Sivakaran, Waterloo, Ontario N2L 3W8 (CA); Bandong, Jose Enrique Macapagal, Waterloo, Ontario N2L 3W8 (CA); Pena, Pedro Eduardo Villanueva, Waterloo, Ontario N2L 3W8 (CA)
(74) Representative: Patel, Binesh

(57) **Abstract**

The present disclosure provides a method (400) for sharing a file when multiple versions exist. Differences between the different versions of a file (e.g., attachment) are determined (406) and only the determined differences are communicated (408). The complete file (e.g., attachment) can be recreated on user devices (410) using a previous version of the file (e.g., attachment) and the transmitted differences, and the complete file (e.g., attachment) can be displayed on user devices so that the operation of the method is not visible to device users.

## Description

### TECHNICAL FIELD

The present disclosure relates to file sharing, and more particularly to a method for sharing a file when multiple versions exists.

### BACKGROUND

Electronic communications allow electronic messages and other information to be exchanged between two or more parties. Some types of electronic messages, such as email messages, allow files to be associated with the electronic messages and sent along with the exchanged electronic messages. A common example is email attachments. Email attachments, in at least some cases, can be changed by recipients of the email message.

### BRIEF DESCRIPTION OF THE DRAWINGS

Figure 1 is a block diagram illustrating a communication system including a mobile communication device in which example embodiments of the present disclosure can be applied.

Figure 2 is a block diagram illustrating a mobile communication device in accordance with one example embodiment of the present disclosure.

Figure 3 is a message sequence diagram illustrating an example method for communicating attachments in accordance with the present disclosure.

Figure 4 is a flowchart illustrating an example method for communicating attachments in accordance with the present disclosure.

### DETAILED DESCRIPTION OF EXAMPLE EMBODIMENTS

Reference will now be made to the accompanying drawings which show example embodiments of the present disclosure. For simplicity and clarity of illustration, reference numerals may be repeated among the Figures to indicate corresponding or analogous elements. Numerous details are set forth to provide an understanding of the example embodiments described herein. The example embodiments may be practised without some of these details. In other instances, well-known methods, procedures, and components have not been described in detail to avoid obscuring the example embodiments described. The description is not to be considered as limited to the scope of the example embodiments described herein.

When a recipient responds to a received communication or message (such as an email message, instant message or other content message) which is associated with a file (such as an attachment), the recipient may change the file, or substitute a new file for the sent file. The transmission of a responsive message with a changed file back to the sending device and/or other recipients of the original file often includes redundant information because the changed attachment typically includes data from the original attachment as well as newly entered data. The communication of the redundant information consumes bandwidth and wastes resources of the sending and receiving devices. The consumption of bandwidth and waste of resources increases with each party added to the message and with each version which is sent. Thus, for this and other reasons, there remains a need for an improved method for communicating attachments.

The present disclosure generally relates to file sharing, and more particularly to a method for sharing a file when multiple versions exist. Methods are described which are implemented by user devices, which may be wired (such as fixed or portable computers) or wireless electronic devices (such as mobile communication devices), as well as a wireless connector system which manages wireless communications for a set of mobile communication devices using a wireless network. The present disclosure provides methods which attempts to optimize the transmission of files (such as attachments) when multiple versions exist by reducing the amount of data sent when changes are made to files shared among a group of two or more electronic devices. While methods of tracking in-line text changes are known, the techniques for tracking inline text changes utilise simple coding techniques which are not feasible for handling changes in files (e.g., attachments) because of the number of the different types of data objects which can exist within files among other reasons.

In accordance with an example method for communicating files such as attachments of the present disclosure, differences between the different versions of a file (e.g., attachment) are determined and only the determined differences are communicated. The complete file (e.g., attachment) can be recreated on user devices using a previous version of the file (e.g., attachment) and the transmitted differences, and the complete attachment can be displayed on user devices so that the operation of the method is not visible to device users.

In accordance with one example embodiment, there is provided a method for sharing a file between a group of at least two electronic devices, the method comprising: receiving a message (e.g., content message such as an email message or instant message) sent from one of the electronic devices in the group, the message having a new version of the file associated therewith; determining differences between the new version of the file and a previous version of the file; storing one or both of the new version of the file and the determined differences; and communicating the determined differences to other electronic devices in the group. The method may also comprise facilitating a data communication session between members of the group.
In accordance with another example embodiment, there is provided a method for sharing a file between a group of at least two electronic devices, the method comprising: receiving a coded message including an indication of the determined differences between a new version of an file and a previous version of the attachment; recreating the new version of the file using the previous version of the file and the identification of the changed content in the new version of the file provided in the coded message. The method may also comprise receiving a content message and the coded message, and associating the recreated file with the received content message. The method may also comprise displaying the received content message as a new message on a display with the recreated file presented as a file to the new message. The method may also comprise storing the recreated file at least temporarily in memory on the other electronic device. The content message is an email message and the file is an attachment to the email message.

In accordance with a further example embodiment, there is provided a method on a computer system for communicating attachments between at least two electronic devices, the method comprising: receiving an email message sent from one of the electronic devices, the email message including a new version of an attachment; determining differences between the new version of the attachment and a previous version of the attachment; forming a coded message including an indication of the determined differences; and communicating the email message and the coded message to other electronic devices of the at least two electronic devices.

In accordance with yet a further example embodiment, there is provided a method on a computer system for communicating attachments exchanged within a data communication session between at least two electronic devices, the method comprising: receiving an email message sent from one of the electronic devices in the data communication session, the email message including a new version of an attachment; detecting changes in the new version of the attachment; determining differences between the new version of the attachment and a previous version of the attachment; forming a coded message, responsive to the determining, the coded message including an indication of the determined differences; and communicating the email message and the coded message to all other electronic devices in the data communication session.

In accordance with a further example embodiment, there is provided an electronic device (such as a server, wireless connector system, user electronic device or the like), the electronic device comprising: a processor; a communication subsystem coupled to the processor; the processor being configured for performing the method(s) set forth herein.

In accordance with yet a further embodiment of the present disclosure, there is provided a computer program product comprising a computer readable medium having stored thereon computer program instructions for implementing a method on a computer system, the computer executable instructions comprising instructions for performing the method(s) set forth herein.

Other aspects and features of the example embodiments will be apparent in view of the following detailed description.

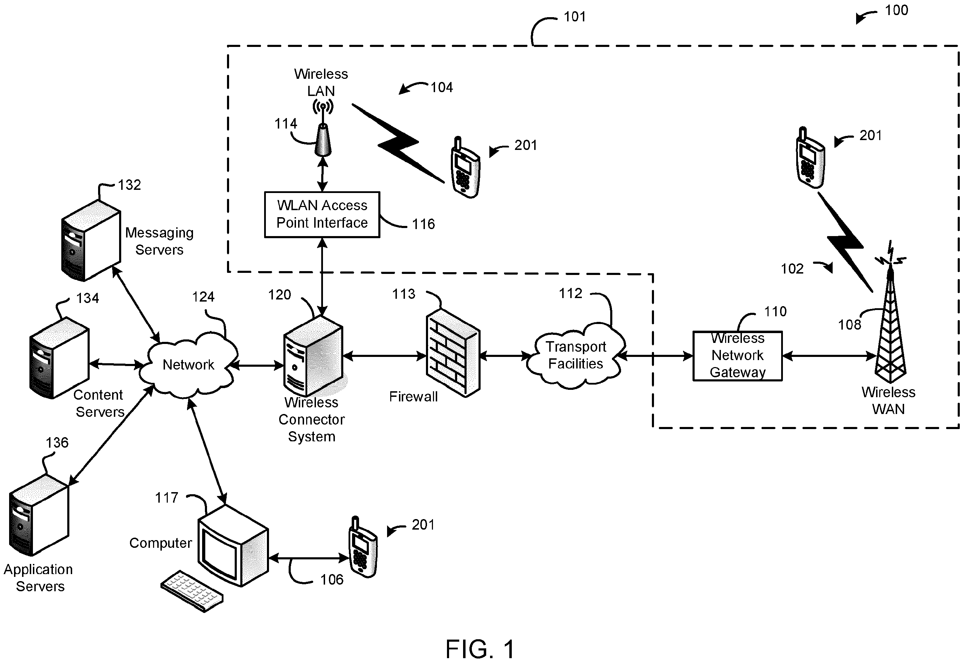

Reference is first made to Figure 1 which shows in block diagram form a communication system 100 in which example embodiments of the present disclosure can be applied. The communication system 100 comprises a number of mobile communication devices (referred to hereinafter as "mobile devices" for convenience) 201 which may be connected to the remainder of system 100 in any of several different ways. Accordingly, several instances of mobile devices 201 are depicted in Figure 1 employing different example ways of connecting to system 100. Mobile devices 201 are connected to a wireless communication network 101 which may comprise one or more of a Wireless Wide Area Network (WWAN) 102 and a Wireless Local Area Network (WLAN) 104 or other suitable network arrangements. In some embodiments, the mobile devices 201 are configured to communicate over both the WWAN 102 and WLAN 104, and to roam between these networks. In some embodiments, the wireless network 101 may comprise multiple WWANs 102 and WLANs 104.

The WWAN 102 may be implemented as any suitable wireless access network technology. By way of example, but not limitation, the WWAN 102 may be implemented as a wireless network that includes a number of transceiver base stations 108 (one of which is shown in Figure 1) where each of the base stations 108 provides wireless Radio Frequency (RF) coverage to a corresponding area or cell. The WWAN 102 is typically operated by a mobile network service provider that provides subscription packages to users of the mobile devices 201. In some embodiments, the WWAN 102 conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), Ev-DO (Evolution-Data Optimized) CDMA2000, EDGE (Enhanced Data rates for GSM Evolution), UMTS (Universal Mobile Telecommunication Systems), HSDPA (High-Speed Downlink Packet Access), IEEE 802.16e (also referred to as Worldwide Interoperability for Microwave Access or "WiMAX), IEEE 802.16m (also referred to as Wireless Metropolitan Area Networks or "WMAN"), 3GPP Long Term Evolution (LTE), LTE Advanced, IEEE 802.20 (also referred to as Mobile Broadband Wireless Access or "MBWA") or various other suitable network types. Although WWAN 102 is described as a "Wide-Area" network, that term is intended herein to incorporate other similar technologies for providing coordinated service wirelessly over an area larger than that covered by typical WLANs.

The WWAN 102 may further comprise a wireless network gateway 110 which connects the mobile devices 201 to transport facilities 112, and through the transport facilities 112 to a wireless connector system 120. Transport facilities may include one or more private networks or lines, the public Internet, a virtual private network, or any other suitable network. The wireless connector system 120 may be operated, for example, by an organization or enterprise such as a corporation, university, or governmental department, which allows access to a network 124 such as a private network (also known as an internal or enterprise network) and its shared resources or the Internet. Alternatively, the wireless connector system 120 may be operated by a mobile network service provider.

The wireless network gateway 110 provides an interface between the wireless connector system 120 and the WWAN 102, which facilitates communication between the mobile devices 201 and other devices (not shown) connected, directly or indirectly, to the WWAN 102. Accordingly, communications sent via the mobile devices 201 are transported via the WWAN 102 and the wireless network gateway 110 through transport facilities 112 to the wireless connector system 120. Communications sent from the wireless connector system 120 are received by the wireless network gateway 110 and transported via the WWAN 102 to the mobile devices 201.

The WLAN 104 comprises a wireless network which, in some embodiments, conforms to IEEE 802.11x standards (sometimes referred to as Wi-Fi) such as, for example, the IEEE 802.11a, 802.11b and/or 802.11g standard. Other communication protocols may be used for the WLAN 104 in other embodiments such as, for example, IEEE 802.11n, IEEE 802.16e, IEEE 802.16m or IEEE 802.20. The WLAN 104 includes one or more wireless RF Access Points (AP) 114 (one of which is shown in Figure 1) that collectively provide a WLAN coverage area.

The WLAN 104 may be a personal network of the user, an enterprise network, or a hotspot offered by an Internet service provider (ISP), a mobile network service provider, or a property owner in a public or semi-public area, for example. The access points 114 are connected to an access point (AP) interface 116 which may connect to the wireless connector system 120 directly (for example, if the access point 114 is part of an enterprise WLAN 104 in which the wireless connector system 120 resides), or indirectly via the transport facilities 112 if the access point 14 is a personal Wi-Fi network or Wi-Fi hotspot (in which case a mechanism for securely connecting to the wireless connector system 120, such as a virtual private network (VPN), may be required). The AP interface 116 provides translation and routing services between the access points 114 and the wireless connector system 120 to facilitate communication, directly or indirectly, with the wireless connector system 120.

The wireless connector system 120 may be implemented as one or more servers, and is typically located behind a firewall 113. The wireless connector system 120 manages communications, including email messages, to and from a set of managed mobile devices 201. The wireless connector system 120 also provides administrative control and management capabilities over users and mobile devices 201 which may connect to the wireless connector system 120.

The wireless connector system 120 allows the mobile devices 201 to access the network 124 and connected resources and services such as one or more messaging servers 132, one or more content servers 134 for providing content such as Internet content or content from an organization's internal servers to the mobile devices 201 in the wireless network 101, one or more application servers 136 for implementing server-based applications, and the like.

The wireless connector system 120 typically provides a secure exchange of data (e.g., communications and other messages such as email messages, personal information manager (PIM) data, and IM data) with the mobile devices 201. In some embodiments, communications between the wireless connector system 120 and the mobile devices 201 are encrypted. In some embodiments, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data.

The wireless network gateway 110 is adapted to send data packets received from the mobile device 201 over the WWAN 102 to the wireless connector system 120. The wireless connector system 120 then sends the data packets to the appropriate connection point such as a messaging server 132, content server 134 or application server 136. Conversely, the wireless connector system 120 sends data packets received, for example, from the messaging server 132, content server 134 or application server 136 to the wireless network gateway 110 which then transmit the data packets to the destination mobile device 201. The AP interfaces 116 of the WLAN 104 provide similar sending functions between the mobile device 201, the wireless connector system 120 and network connection point such as a messaging server 132, content server 134 or application server 136.

The network 124 may comprise a private local area network, metropolitan area network, wide area network, the public Internet or combinations thereof and may include virtual networks constructed using any of these, alone, or in combination.

Computers 117, such as desktop or notebook computer, may also be connected to the network 124 either by a wired or wireless communication link. A mobile device 201 may connect to the wireless connector system 120 using a computer 117 via the network 124 rather than the using the WWAN 102 or WLAN 104. A communication link 106 may be provided for exchanging information between the mobile device 201 and a computer 117 connected to the wireless connector system 120. The link 106 may comprise one or both of a physical interface for a wired communication link and a short-range wireless communication interface for a wireless communication link.

The communication system 100 may be implemented, at least in part, as a cloud based solution in which computers 117 and mobile devices 201 share access to the network resources, e.g. messaging servers 132, content servers 134, and application servers 136, software and other data and information. In a cloud implementation, the network 124 is typically implemented using the Internet rather than a private network although the network 124 may be viewed as a private cloud rather than a public cloud in the form of public Internet based services.

User devices access cloud based applications (referred to hereinafter as "cloud applications"), such as messaging applications, through a web browser or thin client on the computer 117 or mobile device 201. The majority of the processing logic and data of cloud applications is stored on the shared resources (e.g., servers) which are typically at a remote location. Cloud applications allow access from nearly any computer 117 or mobile device 201 having access to the Internet. Advantageously, cloud applications facilitate a converged infrastructure and shared services, which in turn facilitates deployment of applications with easier manageability and less maintenance.

It will be appreciated that the above-described communication system is provided for the purpose of illustration only, and that the above-described communication system comprises one possible communication network configuration of a multitude of possible configurations for use with the mobile devices 201. The teachings of the present disclosure may be employed in connection with any other type of network and associated devices that are effective in implementing or facilitating wireless communication. Variations of the communication system are intended to fall within the scope of the present disclosure. For example, while the mobile devices 201 have been described as having a wireless connector system 120 in the above-described embodiments, the wireless connector system 120 may be omitted in other embodiments. Some or all of the functions of the wireless connector system 120 may be implemented by various communication endpoints, or possible a cloud based resource such as a cloud based server.

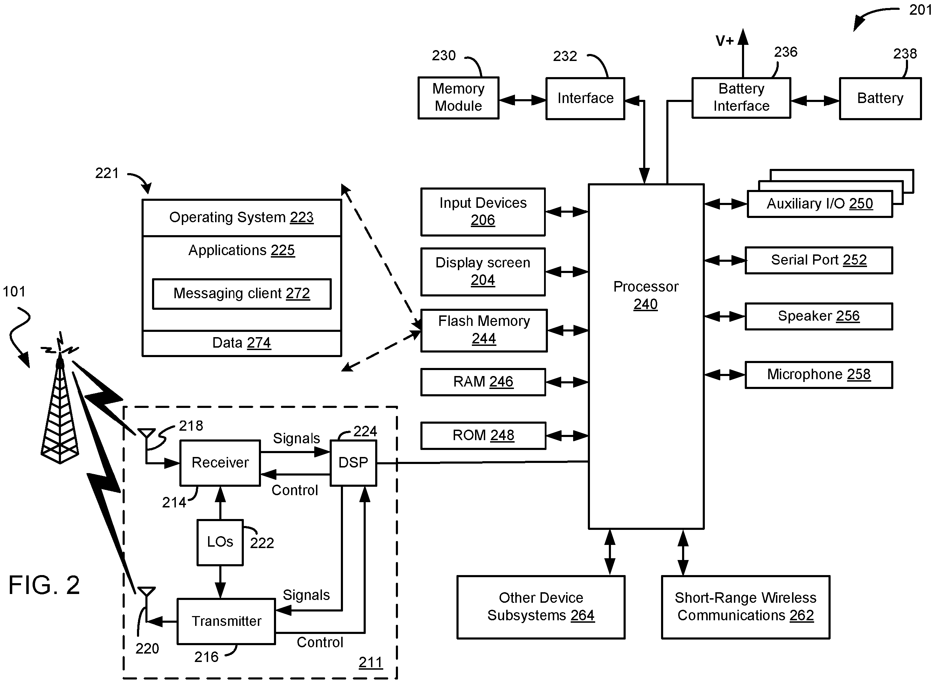

Reference is now made to Figure 2 which illustrates a mobile device 201 in which example embodiments described in the present disclosure can be applied. The mobile device 201 is a two-way communication device having data and voice communication capabilities, and the capability to communicate with other computer systems, for example, via the Internet. Depending on the functionality provided by the mobile device 201, in various embodiments the device 201 may be a multiple-mode communication device configured for both data and voice communication.

The mobile device 201 includes a rigid case (not shown) housing the components of the device 201. The internal components of the device 201 are constructed on a printed circuit board (now shown). The mobile device 201 includes a controller comprising at least one processor 240 (such as a microprocessor) which controls the overall operation of the device 201. The processor 240 interacts with device subsystems such as a wireless communication subsystem 211 for exchanging RF signals with the wireless network 101 to perform communication functions. The processor 240 interacts with additional device subsystems including a display 204 such as a liquid crystal display (LCD), input devices 206 such as a keyboard and control buttons, flash memory 244, random access memory (RAM) 246, read only memory (ROM) 248, auxiliary input/output (I/O) subsystems 250, data port 252 such as serial data port (e.g., Universal Serial Bus (USB) data port), speaker 256, microphone 258, short-range communication subsystem 262, and other device subsystems generally designated as 264.

The input devices 206 may include a touchscreen display, in addition to, or instead of, a keyboard. The touchscreen display may be constructed using a touch-sensitive input surface connected to an electronic controller and which overlays the display 204. The touch-sensitive overlay and the electronic controller provide a touch-sensitive input device and the processor 240 interacts with the touch-sensitive overlay via the electronic controller.

The communication subsystem 211 includes a receiver 214, a transmitter 216, and associated components, such as one or more antenna elements 218 and 220, local oscillators (LOs) 222, and a processing module such as a digital signal processor (DSP) 224. The antenna elements 218 and 220 may be embedded or internal to the mobile device 201 and a single antenna may be shared by both receiver and transmitter. The particular design of the wireless communication subsystem 211 depends on the wireless network 101 in which mobile device 201 is intended to operate.

The mobile device 201 may communicate with any one of a plurality of fixed transceiver base stations 108 of the wireless network 101 within its geographic coverage area. The mobile device 201 may send and receive communication signals over the wireless network 101 after the required network registration or activation procedures have been completed. Signals received by the antenna 218 through the wireless network 101 are input to the receiver 214, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 224. In a similar manner, signals to be transmitted are processed, including modulation and encoding, for example, by the DSP 224. These DSP-processed signals are input to the transmitter 216 for digital-to-analog (D/A) conversion, frequency up conversion, filtering, amplification, and transmission to the wireless network 101 via the antenna 220. The DSP 224 not only processes communication signals, but may also provide for receiver and transmitter control. For example, the gains applied to communication signals in the receiver 214 and the transmitter 216 may be adaptively controlled through automatic gain control algorithms implemented in the DSP 224.

The processor 240 operates under stored program control and executes software modules 221 stored in memory such as persistent memory, for example, in the flash memory 244. As illustrated in Figure 2, the software modules 221 comprise operating system software 223 and software applications 225. The software applications include a messaging client 272, which may be part of a personal information manager (PIM). Persistent data 274, including user data, is also stored in the flash memory 244.

The software modules 221 or parts thereof may be temporarily loaded into volatile memory such as the RAM 246. The RAM 246 is used for storing runtime data variables and other types of data or information. Although specific functions are described for various types of memory, this is merely one example, and a different assignment of functions to types of memory could also be used.

In some embodiments, the mobile device 201 also includes a removable memory card 230 (typically comprising flash memory) and a memory card interface 232. Network access is typically associated with a subscriber or user of the mobile device 201 via the memory card 230, which may be a Subscriber Identity Module (SIM) card for use in a GSM network or other type of memory card for use in the relevant wireless network type. The memory card 230 is inserted in or connected to the memory card interface 232 of the mobile device 201 in order to operate in conjunction with the wireless network 101.

The mobile device 201 also includes a battery 238 as a power source, which is typically one or more rechargeable batteries that may be charged, for example, through charging circuitry coupled to a battery interface such as the serial data port 252. The battery 238 provides electrical power to at least some of the electrical circuitry in the mobile device 201, and the battery interface 236 provides a mechanical and electrical connection for the battery 238. The battery interface 236 is coupled to a regulator (not shown) which provides power V+ to the circuitry of the mobile device 201.

The short-range communication subsystem 262 is an additional optional component which provides for communication between the mobile device 201 and different systems or devices, which need not necessarily be similar devices. For example, the subsystem 262 may include an infrared device and associated circuits and components, or a wireless bus protocol compliant communication mechanism such as a Bluetooth® communication module to provide for communication with similarly-enabled systems and devices.

The mobile device 201 may provide two principal modes of communication: a data communication mode and a voice communication mode. In the data communication mode, a received data signal such as a text message, a message, or Web page download will be processed by the communication subsystem 211 and input to the processor 240 for further processing. For example, a downloaded Web page may be further processed by a browser application or a message may be processed by the messaging client 272 and output to the display 204. A user of the mobile device 201 may also compose data items, such as messages, for example, using the input devices 206 in conjunction with the display 204. These composed items may be transmitted through the communication subsystem 211 over the wireless network 101.

In the voice communication mode, the mobile device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., the voice communication module) and hardware (i.e., the microphone 258, the speaker 256 and input devices). Alternative voice or audio I/O subsystems, such as a voice message recording subsystem, may also be implemented on the mobile device 201. Although voice or audio signal output is typically accomplished primarily through the speaker 256, the display 204 may also be used to provide an indication of the identity of a calling party, duration of a voice call, or other voice call related information.

The construction of a computer 117 is generally similar to a mobile device 201 with the differences relating primarily to size and form factor, as well as the capabilities of the electronic components (which are typically more powerful and larger than in a mobile device 201 due to fewer design constraints). The computer 117 may be enabled for wired or wireless communications, as described above. The construction of computers 117 is well known in the art and will not be described further herein.

The term "electronic device" is used herein to refer to either a mobile device 201 or computer 117, unless stated otherwise.

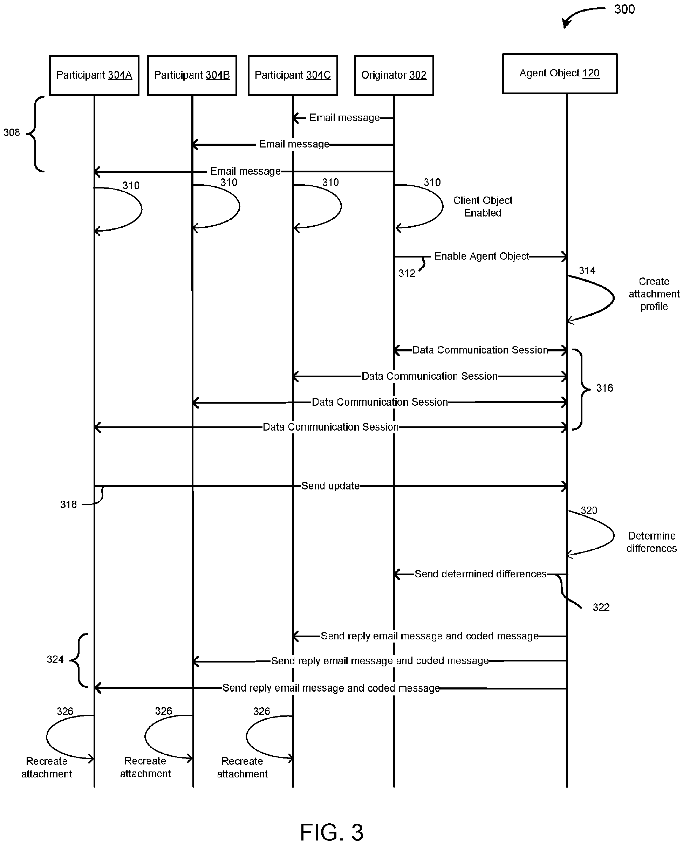

Figure 3 is a message sequence diagram of a method 300 for communicating attachments in accordance with one embodiment of the present disclosure. At event 308, an originating device (referred to herein as the "originator" for convenience, denoted by reference 302) sends an originating communication or messages have a file associated therewith to other participants denoted by reference 304 collectively and references 304A, 304B and 304C individually. In some example embodiments, the originating message is email message and the associated file is an attachment to the email message. In other embodiments, the originating message could be an instant message (IM) or Multimedia Messaging Service (MMS) message, or other suitable of electronic communication or message capable of having a file associated therewith. Rather than being "attached" or transmitted with the message, a link to the file may be included in the message. The link may be provided in any suitable form, such as a uniform resource identifier (URI) or uniform resource locator (URL) depending on embodiment and the location at which the file is stored.

For purposes of convenience, the originating message will be described as an email message and the associated file will be described as an email attachment for the remainder of the example embodiment, but it will be appreciated that the teachings of this embodiment are applicable to the other types of communications and messages mentioned above.

The version of the attachment sent with the originating email message is referred to herein as the original version for convenience. The other participants 304 can reply to the originating email message by reply email message and include a new version of the attachment which includes changes to a previous version of the attachment. The originator 302 and participants 304 are electronic devices having one or both of wired or wireless communications capabilities. The originator 302 and participants 304 may each be a wired or wireless communication device such as a mobile device 201 or computer 117 described above. When the originator 302 and participants 304 are a mobile devices 201, one or all of the mobile devices 201 may be managed a wireless connector system 120 as described above.

The number of total participants in the method 300, including the originator 302, is at least two and may be limited by a maximum number in some examples, for example, for computational efficiency. In the shown example, the total number of participants is four. The maximum number may vary and may depend on the file type of the attachment and/or the content of the attachment when the file type of the attachment supports mixed media (such as, for example, a word processor document) and/or other factors. The original version of the attachment is stored in memory of the parties (e.g. the participants 304 and originator 302), in remote storage, for example by a cloud based messaging server, or both.

Information about the originating email message is typically also stored at least temporarily in memory of the parties, remote storage, or both. The information about the originating email message typically includes information about the participants (such as the sender and recipients). The type of information about the originating email message which is stored may vary. The messaging client 272 uses information about the originating email message to identify reply messages in the message chain. The information about the originating email message may persist until a terminating event removes the information from memory. Methods for tracking and maintaining message chains, including methods for tracking and maintaining email message chains, are well known in the art and will not be described further herein.

At event 310, a Client Object is enabled on the originator 302 and the other participants 304. The Client Object is typically part of the messaging client 272 on the originator 302 and the other participants 304. The enablement of the Client Object can occur automatically or in response to input, for example, in response to user input received via a graphical user interface (GUI). The Client Object may be enabled automatically in response to characteristics of the email message and/or attachment. For example, the Client Object may be enabled when a size of the attachment exceeds a threshold size. Alternatively, the Client Object may be enabled when the number of recipients exceeds a threshold number. Alternatively, the Client Object may be enabled in dependence on a file type of the attachment. For example, the Client Object may be enabled when the attachment is a type of document determined to be an editable document, or a particular type of editable document. Alternatively, the Client Object may be enabled by a service provided, such as a mobile network ("wireless") service provider (for example, based on a data usage being with a threshold of a subscriber's data limit) or a IT policy setting set by an IT administrator.

At event 312, an Agent Object is enabled. The Agent Object may be hosted by a cloud based server such as a cloud based messaging server, one of the electronic devices in the data communication session, the wireless connector system 120 (Figure 1). The Agent Object could be part of a messaging server 132, which may be connected to the wireless connector system 120 or part of a cloud based solution.

The Agent Object includes, or accesses, one or more application programming interfaces (APIs). The APIs are used by the Agent Object to analyze attachments and create attachment profiles, as described more fully below. The APIs may also be provided to determine vocabularies and calling conventions used by local or remote services associated with supported file types and to access those services. The APIs may include, for example, routines, data structures, object classes and protocols for performing these functions. Table 1 specifies some of the APIs which may be part of, or accessed by, the Agent Object.

**Table 1: Application Programming Interfaces (APIs)**

| **API Name** | **Function** | **Input** | **Return parameters** |
|---|---|---|---|
| getDocVendor() | Identify attachment software vendor associated with doc type | void | Returns vendor name (MS, GoogleDoc, Unknown) |
| getDocType() | Identify attachment document type | MS | Returns type of document (.DOCX, Excel, PowerPoint, MS Project, Txt) |
| | | GoogleDoc | Returns type of document (.DOCX, Excel, PowerPoint, MS Project, Txt) |
| getListObjectsInAt tachement() | Connect with APIs available from an OLE object. | MS | Returns a list of OLE objects within MS documents |
| | | GoogleDoc | Returns a list of OLE objects within GoogleDoc documents |
| createObjectProfil e() | Create profile of attachment | MS | Returns success / failure |
| | | GoogleDoc | Returns success / failure |
| logProcessObjProfi ICreation() | Creates a log for developers to debug any issues. Used in conjunction with createob_jectProfile() | void | Returns log data in a text file for debugging |
| enableLogProcess () | Enables logProcessObjProfilCreation() | void | Returns success / failure |
| disableLogProcess () | Disables logProcessObjProfilCreation() | void | Returns success / failure |
| osCompatibiltyCh eck() | Validates compatibility with OS version | OS_Version | Returns success / failure |
| configLogdata() | Configures the data attributes for logging | void, Object_Typ e | Returns all the objects and related success / failures. If the input specifies to watch a certain object type(s), it will only return the data specific to that object(s) |
| detectChange() | Detects changes to the attachment | void | Return the a list of objects that are impacted |
| transmitChange() | To update the parties in data communication session with the detected change. | void | Returns success / failure |
| transmitChange() | To update the parties in data communication session with the detected change. | Object; Object_Typ e | Transmits specific changes to objects |

The API *transmitChange* () could be used to update parties in data communication session about detected changes to a specific object, such as a specific paragraph or image within an attachment, or about specific object types, rather than all changes in the attachment, thereby providing a finer level of detail about changes in the attachment. The finer level of detail provides the possibility for even greater bandwidth savings in that users may be only be concerned about certain changes and can therefore be notified about specific changes to the attachment which are of concern.

The Agent Object supports particular file types, which may vary between embodiments. In at least some examples, the Agent Object works with the following file types: plain text documents and email messages, word processing documents (including, but not limited to, ".doc" and ".docx" file types associated with Microsoft Word^{™}), rich-text and HyperText Markup Language (HTML) documents and email messages. Other file types could also be supported in other embodiments.

The Agent Object also includes or accesses APIs for file and object types supported by the Agent Object, including APIs for embedded objects such as OLE objects defined by Microsoft Corporation and equivalent object types. The file and object types supported by the Agent Object may vary between embodiments. Typically, one or more APIs are provided for each file type and object type. The file-specific and object-specific APIs may be provided, for example, by an application server 136 or other server, web services (referred to herein as "web APIs" for convenience), or a combination thereof. In some examples, web APIs may be defined set of Hypertext Transfer Protocol (HTTP) request messages, along with a definition of the structure of response messages, usually in an Extensible Markup Language (XML) or JavaScript Object Notation (JSON) format.

At event 314, the Agent Object analyzes the original version of the attachment and creates a profile for the attachment. In some example, the profile includes a listing of one or more content elements included in the attachment and a location of the one or more content elements in the attachment. The listing may identify each of the one or more content elements by content type when more than one content type is supported by the attachment. The profile may identify a number of instances of each content type in the attachment. The profile may include an identification of the file type and describe the file contents, possibly within the context of each of the content elements and/or each content type contained in the attachment.

The nature of the profile may vary depending on the file type among other possible factors. In some examples, when the attachment is a file type that supports mixed media (such as a word processing document), the profile includes a listing which identifies each of the one or more content elements included in the file by content type (e.g., text, images, diagrams, audio, videos, uniform resource locators (URLs), and the like) and a location of the one or more content elements in the attachment. The profile may identify a number of instances of each content type in the attachment (e.g., the number of paragraphs and/lines of text, number of diagrams, audio, videos, web URLs, and the like). When the attachment includes text, the profile may include formatting information associated with the text such as font type, font style and effects (bold, underlining, colour, and the like), and size. The profile may include metadata associated with some or all of the content in the file, such as audio, images, and videos.

At event 316, a data communication session or channel is initiated between the Agent Object and each of the participants (e.g., the originator 302 and participants 304). The data communication session can be implemented as a Session Initiation Protocol (SIP) session or other suitable communication session type, including possibly a non-standardized/proprietary communication session. The data communication session is maintained for the entire email chain (also known as an email conversation). The data communication session is used to track changes to the attachment, as described below. The data communication session is used as a channel for the duration of the data communication session until terminated.

At event 318, an update to the attachment in the form of a reply email message is formed by a participant 304A and sent to the originator 302 and participants 304B and 304C. The reply email message includes a new version of the attachment with changes relative to the original version. The new version of the attachment is typically stored in the memory of the sender of the update, e.g., participant 304A, the remote storage, both. The new version of the attachment may replace the original version of the attachment stored in memory so that only the most recent version of the attachment is stored.

At event 320, the Agent Object intercepts the reply email message with the new version of the attachment and determines the differences (e.g., text, images, diagrams, etc.) between the new version of the attachment and the original version of the attachment. The Agent Object determines the differences by comparing the new version of the attachment with the original version of the attachment for each of the one or more content elements in the profile to determine the differences between the new version of the attachment and the previous version of the attachment. The Agent Object may also determine locations of the determined differences between the new version of the attachment and the previous version of the attachment to identify changed content in the new version of the attachment. The Agent Object may store the new version of the attachment, the determined differences, or both. The determined differences may be stored as a separate file (referred to herein as the "differential file").

At event 322, the determined differences are communicated by the Agent Object to the Client Object on the sender of the update, e.g., participant 304A. This step is optional when the new version of the attachment is stored in memory on the sender of the update, e.g., participant 304A and may be omitted in other examples.

At event 324, the Agent Object forms a coded message including an indication of the determined differences. The code message is an application layer message which will not be visible to a device user. The coded message may further include the location of the determined differences to provide an identification of the changed content in the new version of the attachment. The Agent Object communicates (e.g., sends) the reply message and the coded message to the originator 302 and participants 304B and 304C but without the new version of the attachment. In some embodiments, the coded message may include a link to download the new version from the Agent Object in its entirety if the attachment was not stored or downloaded previously, or download the file containing the determined differences from the Agent Object.

At event 326, the Client Object of the originator 302 and participants 304B and 304C recreate the new version of the attachment using the original version of the attachment stored in memory and the identification of the changed content in the new version of the attachment provided in the coded message, which may be described in a downloaded file containing the determined differences as mentioned previously. The recreated attachment may be stored in memory of the participants 304, and may replace an original version of the attachment stored in memory so that only the most recent version of the attachment is stored. The recreated attachment is also associated with the received email message on the other electronic device. The received email message and information pertaining thereto may be displayed within various user interface screens of the GUI as a conventional new email message with the recreated attachment presented as an attachment to the email message. Thus, the recreated attachment may be displayed so that the operation of the method 300 is not visible to device users.

While the foregoing description is based on an email message which originated at the originator 302 and which was changed by the originator 302, the method would operate analogously had the originating email message or reply email messages originated at one of the participants 304.

The above-described methods provide a solution for sharing multiple versions of an attachment without having to transmit the entire file to each recipient with each revision. The differences between versions are tracked and only the differences between versions are transmitted during the email chain, which requires minimal bandwidth relative to transmitting the entire file. This avoids transmitting redundant information for multiple parties and multiple times over the duration of an email chain, thereby saving network bandwidth and computing resources which can be used otherwise for other network activities. The benefits are particularly advantageous when the email chain occurs partially or entirely over a wireless network rather than a wired network, as wireless channel bandwidth is more costly and scarcer. This also saves resources on user devices, by reducing battery current drain due to excessive load on the RF transceiver and continuous activation of RF power management.

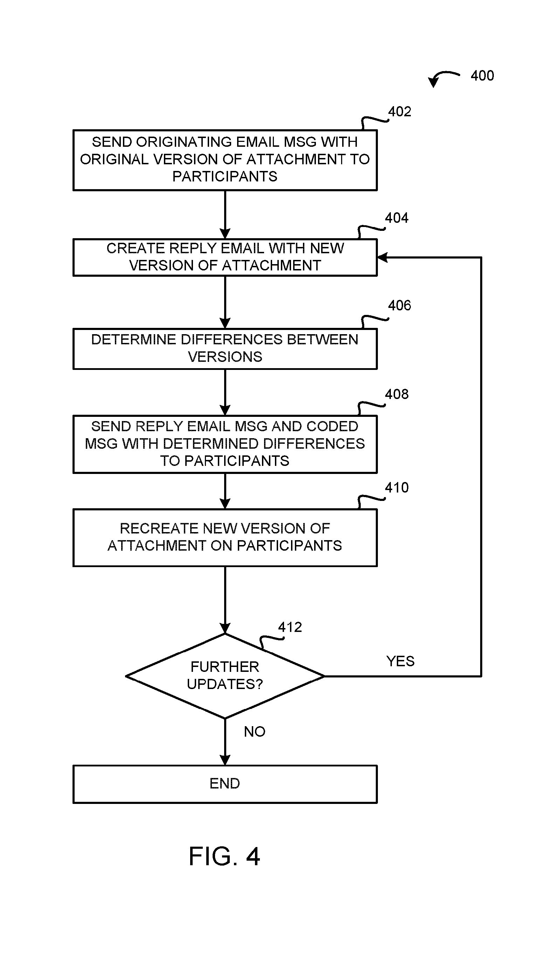

Figure 4 shows in flowchart form a method 400 in accordance with some embodiments of the present disclosure. The method 400 can be implemented with a processor, such as the processor 240, and stored on a tangible computer readable medium, such as the flash memory 244, hard drives, CDs, DVDs, and the like. Coding of software for carrying out the method 400 is within the scope of a person of ordinary skill in the art given the present disclosure. The method 400 may contain additional or fewer processes than shown and/or described, and may be performed in a different order.

An originating email message having a version of an attachment is sent from one electronic device to one or more electronic devices (402). The sender and recipient(s) are referred to as participants 304, as mentioned previously.

The attachment is changed by one of the participants 304, and a reply email message with a new version of the attachment is sent from a messaging client 272 on a sending device on which the attachment was changed to the other participants (404).

The reply email message having the new version of the file as an attachment is intercepted and the differences between the new version and the current version are determined (406). The new version of the file may be intercepted by the Client Object on a sending device on which the attachment was changed, which redirects the new version to an Agent Object which determines the differences, as mentioned previously.

A coded message including an indication of the determined differences is generated by the Client Object or Agent Object, depending on the embodiment, and the reply email message and coded message are communicated (e.g., sent) to the other participants 304 (408), as described previously. The coded message is an application layer message which is not visible to device users.

The new version of the attachment is recreated on participants 304 which receive the reply email message and coded message, using a previous version of the attachment and the identification of the changed content in the new version of the attachment provided in the coded message (410). As mentioned previously, the recreated attachment is associated with the received email message. The received email message and information pertaining thereto may be displayed within various user interface screens of the GUI as a conventional new email message with the recreated attachment presented as an attachment to the email message so that the operation of the method is not visible to device users.

If further updates/changes to the attachment occur (block 412), the operations 404 to 410 are repeated. When no further updates/changes to the attachment occur, the operations end.

The data communication session may become dormant after a set period of inactivity (e.g., one week) in the email chain. When a new message in the email chain is received, a new data communication session could be started by the user device which sent the new message, or the old data communication session could be recreated using session parameters stored in the user devices and/or the cloud based server or wireless connector system 120.

While not described in the methods 300 and 400 to avoid obscuring the example embodiments described herein, participants 304 which do not support the Client Object and Agent Object may still participate in the email chain. Though not described above, the methods can be adapted to identify which participants in the email chain that support the described methods and which participants do not support the described methods. For participants that do not support the described methods, unaltered versions of the attachments may be sent in conventional way while just the differences are sent to the other participants.

The Client Object and Agent Object may each be implemented using software, hardware, or a combination of each. The implementation in hardware may take the form of a special purpose processor (for example, with embedded memory), a special purpose circuit or subcircuit, or the like, which may be part of a mobile device 201, computer 117 or server depending on the embodiment. In some embodiments, when a participant hosts the Agent Object, the suitable hardware for both Client Object and Agent Object functionality form part of the mobile device 201 or computer 117 acting as the participant. The implementation in hardware provides acceleration to facilitate more rapid execution of the method and thereby reduce or prevent notable delays when integrating changes in the attachment. As attachments continue to increase in size and in frequency, and the cost of custom hardware manufacturing continues to decline, the additional benefits realized by hardware acceleration of the Client Object and Agent Object functions increasingly outweighs any associated drawbacks.

The getDocVendor(), logProcessObjProfilCreation(), logProcessObjProfilCreation(), enableLogProcess(), disableLogProcess(),detectChange() and detectChange() and transmitChange() APIs are considered to be the most suitable functions for a hardware implementation, although it remains possible the more or fewer of these APIs, or other APIs, could be implemented in hardware.

While the foregoing examples have described tracking and communicating changes in files associated with electronic communications and messages (e.g., email messages), it is contemplated that the above-described methods could be adapted to objects embedded within an email message, such as an HTML-formatted email message. It is also contemplated that streaming, such as audio, video or other multimedia streaming can be adapted to use the above-described methods to optimize streaming between source and destination.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from its spirit or essential characteristics. The described example embodiments are to be considered in all respects as being only illustrative and not restrictive. The present disclosure intends to cover and embrace all suitable changes in technology. The scope of protection sought by the present disclosure is, therefore, described by the appended claims rather than by the foregoing description.

## Claims

1. A method for sharing a file between a group of at least two electronic devices, the method comprising:
receiving a message sent from one of the electronic devices in the group, the message having a new version of the file associated therewith;
determining differences between the new version of the file and a previous version of the file;
storing one or both of the new version of the file and the determined differences; and
communicating the determined differences to other electronic devices in the group.

2. The method of claim 1, wherein the communicating comprises:
sending a message to the other members of the group, the message including a link to one of both of the new version of the file or the determined differences.

3. The method of claim 1, wherein the communicating comprises:
sending a message to the other members of the group, the message having the determined differences associated therewith.

4. The method of claim 3, further comprising:
forming a coded message including an indication of the determined differences; and
sending the coded message to other members of the group.

5. The method of claim 4, comprising:
sending the message and the coded message to other members of the group.

6. The method of claim 5, further comprising:
receiving the message and the coded message on another electronic device in the group;
recreating the new version of the file on the other electronic device using the previous version of the file and the identification of the changed content in the new version of the file provided in the coded message; and
associating the recreated file with the received message on the other electronic device.

7. The method of any one of claims to 6, comprising determining locations of the determined differences between the new version of the file and the previous version of the file to identify changed content in the new version of the file, the coded message further including the location of the determined differences to provide an identification of the changed content in the new version of the file.

8. The method of any one of claims 1 to 7, further comprising:
initiating a data communication session in response to receiving an originating message having an original version of the file which meets predetermined criterion, the data communication session for communicating files between the at least two electronic devices.

9. The method of claim 8, wherein the data communication session is between a wireless connector system and the at least two electronic devices, wherein the data communication session is initiated by the wireless connector system in response to the wireless connector system receiving the originating message having an original version of the file which meets predetermined criterion.

10. The method of claim 8, wherein the data communication session is managed by a cloud based messaging server, wherein the data communication session is initiated by the cloud based messaging server in response to receiving the originating message having an original version of the file which meets predetermined criterion.

11. The method of any one of claims 8 to 10, wherein the predetermined criterion is a size of the original version of the file exceeds a size threshold.

12. The method of any one of claims 8 to 10, wherein the predetermined criterion is a file type of the original file is of predetermined type.

13. The method of any one of claims 8 to 12, further comprising:
creating a profile of the original version of the file in response to initiating the data communication session, wherein the profile includes a listing of one or more content elements included in the file and a location of the one or more content elements in the file;
wherein the determining includes comparing the new version of the file with the previous version of the file for each of the one or more content elements in the profile to determine the differences between the new version of the file and the previous version of the file.

14. The method of claim 13, wherein the profile identifies each of the one or more content elements by content type when more than one content type is supported by the file.

15. The method of any one of claims 1 to 14, wherein the message is an email message and the file is an attachment to the email message.
